# EUROPEAN PATENT SPECIFICATION

(11) **EP 3 798 026 B1**
(45) Date of publication and mention of the grant of the patent: **06.07.2022**
(21) Application number: 20196136.4
(22) Date of filing: 15.09.2020
(51) Int. Cl.: B60C 15/024

(54) **TYRE AND RIM ASSEMBLY**
REIFEN- UND FELGENANORDNUNG
PNEUMATIQUE ET ENSEMBLE JANTE

(30) Priority: 30.09.2019 JP 2019180271
(43) Date of publication of application: 31.03.2021
(73) Proprietor: Sumitomo Rubber Industries, Ltd., Kobe-shi, Hyogo-ken 651-0072 (JP)
(72) Inventor: TERASHIMA, Masaki, Kobe-shi, Hyogo 651-0072 (JP); UEDA, Kenji, Kobe-shi, Hyogo 651-0072 (JP); ITO, Masaya, Kobe-shi, Hyogo 651-0072 (JP); HAYASHI, Koji, Kobe-shi, Hyogo 651-0072 (JP); OBA, Ryo, Kobe-shi, Hyogo 651-0072 (JP); NAGASE, Masahiro, Kobe-shi, Hyogo 651-0072 (JP); NAKAMURA, Masatomo, Kobe-shi, Hyogo 651-0072 (JP); TAMAI, Junya, Kobe-shi, Hyogo 651-0072 (JP); TATSUTA, Masahiro, Kobe-shi, Hyogo 651-0072 (JP)
(74) Representative: Manitz Finsterwald Patent- und Rechtsanwaltspartnerschaft mbB

(56) References cited:
- EP-A1- 0 615 868
- EP-A2- 0 983 875
- JP-A- S5 591 409
- JP-A- 2004 168 201

## Description

### BACKGOUND ART

### Field of the invention

The present invention relates to a tyre and rim assembly.

### Description of the Related Art

JP S63-247104 A discloses a pneumatic tyre mounted on a rim. The pneumatic tyre mounted on the rim comprises an outboard sidewall forming a tyre width equal to the maximum tyre width near rim flanges of the rim, and the outboard sidewall is formed by a curve or a straight line such that the tyre width decreases from the maximum width position to the tread portion.

JP 2004-168201 A discloses a tyre and rim assembly according to the preamble of claim 1. Further tyre and rim assemblies having a rim guard formed at a sidewall surface of the tyre are disclosed, for example, in EP 0 983 875 A2, JP S55-91409 A, and EP 0 615 868 A1.

### SUMMARY OF THE DISCLOSURE

In the pneumatic tyre of JP S63-247104 A, there was room for improvement in reducing air resistance of the tyre to improve fuel efficiency.

The present invention has been made in view of the above circumstances and has a main object to provide a tyre and rim assembly capable of reducing air resistance.

In one aspect of the invention, a tyre and rim assembly includes a rim having a pair of flanges, and a pneumatic tyre being mounted onto the rim, the pneumatic tyre including a pair of bead portions, a carcass extending between the pair of bead portions, and a rim guard being provided on at least one of the pair of bead portions, wherein in a cross-sectional view of the assembly under a standard state in which the pneumatic tyre is inflated to a standard pressure but loaded with no tyre load, the rim guard protrudes outwardly in a tyre axial direction from a sidewall reference outer surface of the tyre so as to cover over one of the pair of flanges located on the at least one of the bead portions, the rim guard defines an axially outermost end thereof, a radially outermost end thereof, and an imaginary rim guard straight line that passes the axially outermost end and the radially outermost end, an angle θ of the imaginary rim guard straight line with respect to a tyre radial direction is equal to or less than 40 degrees, and a maximum gap (A) in the tyre radial direction between the one of the pair of flanges and the rim guard is equal to or less than 2.0 mm.

According to a preferred embodiment of the invention, the angle θ may be equal to or less than 35 degrees.

According to a preferred embodiment of the invention, in a cross-sectional view of the assembly, the rim guard may include a rim guard surface that corresponds to the imaginary rim guard straight line.

According to a preferred embodiment of the invention, the rim guard may include a rim guard surface that is a concave circular arc surface being concave inwardly in the tyre radial direction with respect to the imaginary rim guard straight line.

According to a preferred embodiment of the invention, a radius of curvature of the concave circular arc surface of the rim guard may be in a range of 100 to 300 mm.

According to a preferred embodiment of the invention, the maximum gap (A) may be equal to or less than 1.5 mm.

The pair of bead portions includes a pair of bead cores, the carcass includes a main portion extending between the pair of bead cores and a pair of turn-up portions turned up around the pair of bead cores from axially inside to outside of the tyre, and the axially outermost end of the rim guard may be located inward in the tyre radial direction with respect to a radially outer end of one of the pair of turn-up portions located on a side of the at least one of the bead portions.

The radially outermost end of the rim guard may be located outward in the tyre radial direction with respect to the radially outer end of one of the turn-up portions.

According to a preferred embodiment of the invention, in the at least one of the bead portions, a bead apex rubber that extends outwardly in the tyre radial direction from the bead core is disposed, and the axially outermost end of the rim guard may be located inward in the tyre radial direction with respect to a radially outer end of the bead apex rubber.

According to a preferred embodiment of the invention, on the at least one of the bead portions, a first gauge of rubber disposed outside in the tyre axial direction of the carcass at a location of the axially outermost end of the rim guard may be equal to or less than three times a second gauge of rubber disposed outside in the tyre axial direction of the carcass at a location of the radially outermost end of the rim guard.

### BRIEF DESCRIPTION OF THE DRAWINGS

FIG. 1 is a cross-sectional view of a tyre and rim assembly according to the present invention;
FIG. 2 is an enlarged view of a bead portion and a sidewall portion of FIG. 1;
FIG. 3 is a schematic horizontal-sectional view of the tyre and rim assembly installed to a vehicle;
FIG. 4 is a front view of the vehicle of FIG. 3;
FIG. 5 is a cross-sectional view of the bead portion and the sidewall portion of FIG. 1; and
FIG. 6 is a cross-sectional view of the bead portion according to another embodiment of the invention.

### DESCRIPTION OF THE PREFERRED EMBODIMENTS

An embodiment of the present invention will be explained below with reference to the accompanying drawings.

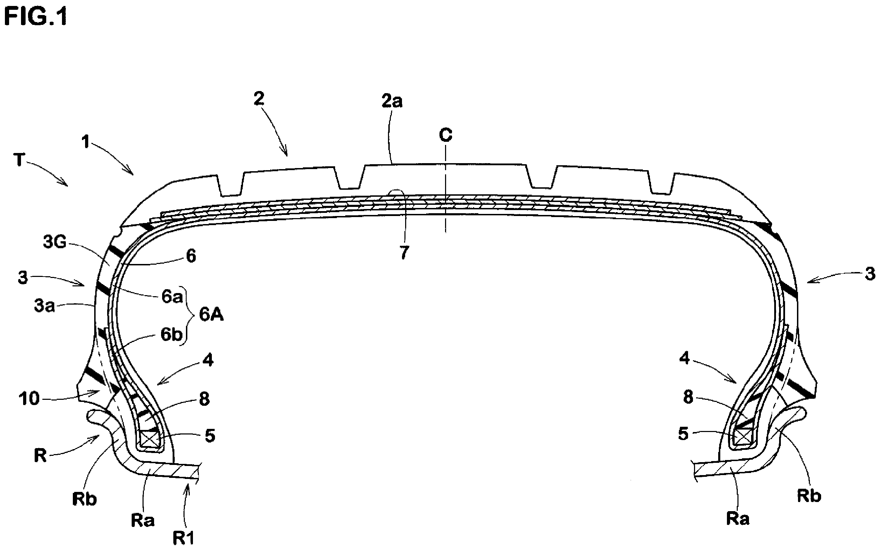

FIG. 1 is a cross-sectional view of a tyre and rim assembly (hereinafter simply referred to as "assembly") T under a standard state according to an embodiment of the invention. The cross-sectional view of FIG. 1 is a cross sectional view including the tyre axis (not illustrated). As illustrated in FIG. 1, the assembly T according to the present embodiment includes a rim R, and a pneumatic tyre (hereinafter simply referred to as "tyre") 1. In FIG. 1, as the tyre 1, a passenger car tyre is illustrated, for example. Note that the tyre 1 according to the invention can be embodied as a motorcycle tyre, a heavy-duty vehicle tyre and the like.

The rim R according to the present embodiment includes a pair of rim seats Ra for receiving a pair of bead portions 4 of the tyre 1, and a pair of flanges Rb connected to respective axially outer ends of the pair of rim seats Ra and extending outwardly in a tyre radial direction. The pair of flanges Rb, for example, supports axially outer surfaces of the pair of bead portions 4. The rim R, in the present embodiment, is a standard wheel rim R1 that is officially approved for the tyre 1 by standards organizations on which the tyre 1 is based, wherein the standard wheel rim R1 is the "standard rim" specified in JATMA, the "Design Rim" in TRA, and the "Measuring Rim" in ETRTO, for example.

As used herein, the "standard state" is such that the tyre 1 is mounted onto the standard wheel rim R with a standard pressure but loaded with no tyre load. Unless otherwise noted, dimensions of the assembly T are measured in the standard state.

As used herein, the "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

The tyre 1, for example, includes a tread portion 2 having a ground contact surface 2a that comes into contact with the ground, a pair of sidewall portions 3 extending inwardly in the tyre radial direction from respective axially outer ends of the tread portion 2, and the pair of bead portions 4 connected to the pair of sidewall portions 3 and having respective bead cores 5 disposed therein.

The tyre 1 according to the present embodiment may further include a carcass 6 extending between the pair of bead portions 4, and a belt layer 7 disposed outwardly in the tyre radial direction of the carcass 6 in the tread portion 2. Furthermore, the tyre 1 may include a pair of bead apex rubbers 8 made of hard rubber composition and disposed outwardly in the tyre radial direction of the pair of bead cores 5, and a pair of sidewall rubbers 3G forming outer surfaces 3a of the pair of sidewall portions 3. As to the bead cores 5, the belt layer 7, the bead apex rubbers 8 and the sidewall rubbers 3G, conventional aspects are appropriately adopted.

The carcass 6, in the present embodiment, is composed of a single carcass ply 6A. The carcass ply 6A, for example, includes a plurality of carcass cords that are oriented at an 5 angle of 75 to 90 degrees with respect to the tyre equator C and topping rubber to coat the carcass cords.

The carcass ply 6A, for example, includes a main portion 6a and a pair of turn-up portions 6b. The main portion 6a, for example, extends between the bead cores 5 in a toroidal manner. The turn-up portions 6b, for example, are connected to the bead main portion 6a and are turned up around the bead cores 5 from axially inside to the outside of the tyre.

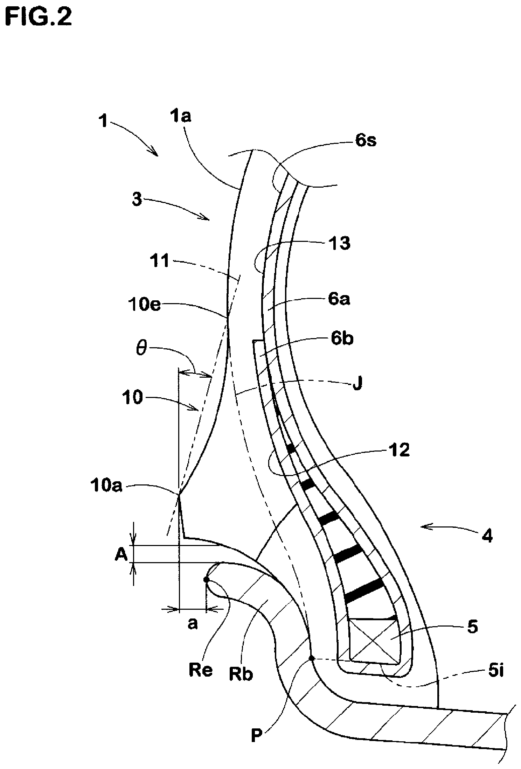

FIG. 2 is an enlarged view of the bead portion 4 and the sidewall portion of the left side of FIG. 1. As illustrated in FIG. 2, the tyre 1 according to the present embodiment further includes a rim guard 10 provided on at least one of the pair of bead portions 4. In the present embodiment, the rim guard 10 is provided on either side of the bead portions 4. Each rim guard 10 protrudes outwardly in the tyre axial direction from a respective sidewall reference outer surface J of the tyre 1 so as to cover over the flange Rb on either side of the bead portions 4. Further, each rim guard 10 according to the present embodiment extends continuously in the tyre circumferential direction.

As used herein, the sidewall reference outer surfaces J is an imaginary outer surface of the sidewall portion 3 when no rim guard is provided. Specifically, the sidewall reference outer surfaces J is obtained by moving an outer contour line 6s of the carcass ply 6A onto a reference point P along the tyre axial direction. Further, the reference point P is a point on an outer surface 1a of the tyre 1 at a location of a radially inner end 5i of the bead core 5. As the outer contour line 6s, the outer surface 12 of the turn-up portion 6b shall be adopted. In the area where the turn-up portion 6b is not provided (e.g., the area outside the tyre radial direction than the turn-up portions 6b), the outer surface 13 of the main portion 6a shall be adopted as the outer contour line 6s.

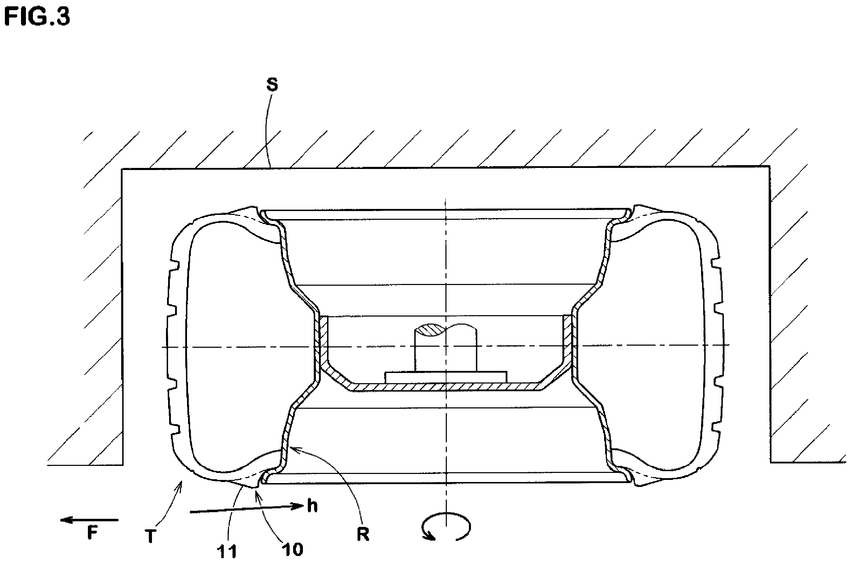

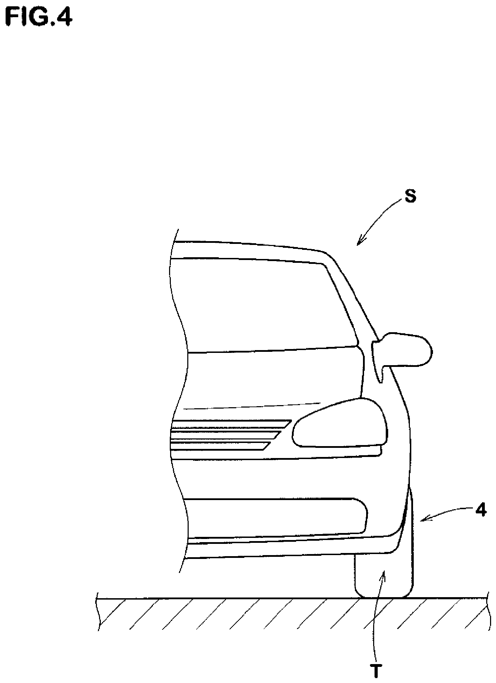

FIG. 3 is a schematic horizontal-sectional view of the assembly T installed to a vehicle S. FIG. 4 is a half front view of the vehicle of FIG. 3. Note that the arrow F indicates a traveling direction of the vehicle S. As illustrated in FIG. 3 and FIG. 4, on the outboard of the vehicle, the vicinity of the bead portion 4 may be exposed to the outside of the vehicle S. In the present embodiment, as shown in FIG. 2, an angle θ of an imaginary rim guard straight line 11 with respect to the tyre radial direction is equal to or less than 40 degrees. Here, the imaginary rim guard straight line 11 is a straight line that passes an axially outermost end 10a of the rim guard 10 and the radially outermost end 10e of the rim guard 10. As a result, resistance of the air (h) flowing from a surface of the imaginary rim guard straight line 11 toward the rim R when the vehicle S runs can be reduced. Note that when the axially outermost end 10a of the rim guard 10 forms a plurality of locations on the rim guard 10 in the tyre radial direction, the axially outermost end 10a is defined as one that is located outermost in the tyre radial direction. Further, if the outer contour line 6s of the carcass ply 6A does not connect with an outer surface 1a of the tyre 1, the radially outermost end 10e of the rim guard 10 is defined as the position where the outer contour line 6s and an outer surface 1a of the tyre 1 are closest to each other.

As illustrated in FIG. 2, a maximum gap (A) in the tyre radial direction between the flange Rb and the rim guard 10 is equal to or less than 2.0 mm. As a result, the air passing through the surface of the imaginary rim guard straight line 11 is suppressed from flowing between the flange Rb and the rim guard 10, reducing air resistance. Thus, in the assembly T according to the present embodiment, the specific angle θ and maximum gap (A) can work together to reduce resistance of the air flowing on the surface of the rim guard 10, improving fuel efficiency.

In order to further improve the above-mentioned effect, the angle θ is preferably equal to or less than 35 degrees, more preferably equal to or less than 30 degrees. When the angle θ becomes excessively small, the boundary layer of air flowing on the surface of the rim guard 10 is likely to peel off, which may increase air resistance. Further, when the angle θ becomes excessively small, the radially outermost end 10e of the rim guard 10 tends to be located relatively outward in the tyre radial direction, and volume of the rim guard 10 becomes large, which may deteriorate rolling resistance. Thus, the angle θ is preferably equal to or more than 5 degrees.

The maximum gap (A) is preferably equal to or less than 1.5 mm. This can further suppress the air flow between the flange Rb and the rim guard 10. When the maximum gap (A) becomes excessively small, the rim guard 10 and the flange Rb are in intimate contact with each other upon traveling, and the rim guard 10 may be damaged, which may increase air resistance. Thus, the maximum gap (A) is preferably equal to or more than 1.0 mm.

Preferably, the axially outermost end 10a of the rim guard 10 is located at the same position in the tyre axial direction as the axially outermost end Re of the flange Rb, or beyond the axially outermost end Re of the flange Rb outwardly in the axial direction. Thus, when the air passing through the surface of the imaginary rim guard straight line 11 flows toward the rim R, the chance of the air coming into contact with the flange Rb becomes smaller, so the air resistance becomes smaller.

When a distance (a) in the tyre axial direction between the axially outermost end 10a of the rim guard 10 and the axially outermost end Re of the flange Rb is excessively large, the air resistance passing through the surface of the rim guard 10 may increase. Thus, the distance (a) is preferably equal to or less than 10 mm, more preferably equal to or less than 5 mm. Further, to protect the flange Rb, the distance (a) is preferably equal to or more than 1 mm.

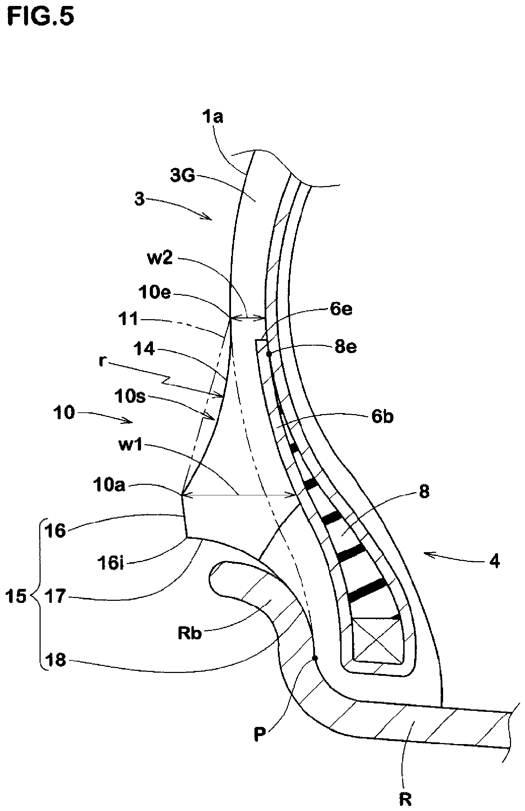

FIG. 5 is a cross-sectional view of the bead portion 4 and the sidewall portion 3 on the left side of FIG. 1. As illustrated in FIG. 5, the rim guard 10, in the present embodiment, includes a rim guard surface 10s that includes an outer surface 14 and an inner surface 15 located inwardly in the tyre radial direction of the outer surface 14.

The outer surface 14, for example, extends from the radially outermost end 10e of the rim guard 10 to the axially outermost end 10a of the rim guard 10, and is inclined in a direction axially outwardly toward inside in the tyre radial direction. In the present embodiment, the outer surface 14 is formed in a concave circular arc surface being concave inwardly in the tyre radial direction with respect to the imaginary rim guard straight line 11. Such an outer surface 14 can suppress contact between the air (h) flowing from the outer surface 14 toward the rim R and the rim R when traveling, and prevents air separation on the surface of the rim R. Thus, by increasing the effect of reducing air resistance, fuel efficiency can be improved.

Preferably, a radius of curvature (r) of the concave circular arc surface of the rim guard 10 is in a range of 100 to 300 mm. When the radius of curvature (r) is less than 100 mm, large stress concentration may occur on the outer surface 14, and the rim guard 10 may be damaged. When the radius of curvature (r) is more than 300 mm, the contact between the air (h) flowing from the outer surface 14 side toward the rim R and the rim R may not be effectively suppressed upon traveling. Note that the radius of curvature (r) is an average value of the radii of curvature from the axially outermost end 10a of the rim guard 10 to the radially outermost end 10e of the rim guard 10.

The inner surface 15, for example, extends from the axially outermost end 10a of the rim guard 10 to the reference point P, and all or a major part thereof may be inclined axially inwardly toward inside in the tyre radial direction. The inner surface 15, in the present embodiment, includes a first portion 16 extending inwardly in the tyre radial direction from the axially outermost end 10a of the rim guard 10, a second portion 17 extending inwardly in the tyre radial direction from the first portion 16, and a third portion 18 connected to the second portion 17. The first portion 16, for example, extends in a straight shape to have a radially inner end 16i thereof terminating outside in the tyre axial direction with respect to the flange Rb. The second portion 17, for example, extends in a concave circular arc shape with a larger inclination angle with respect to the tyre radial direction than that of the first portion 16. The second portion 17 is not in contact with the rim R. The third portion 18, for example, is in contact with the rim R, and is connected to the second portion 17 smoothly to form a concave circular arc shape.

In the present embodiment, the rim guard surface 10s is formed in a substantially trapezoidal shape with apexes including the reference point P, the radially inner end 16i, the axially outermost end 10a, and the radially outermost end 10e. Note that the rim guard surface 10s of the rim guard 10 is not limited to such an aspect, but can be a substantially triangular shape with apexes including the reference point P, the axially outermost end 10a of the rim guard 10, and the radially outermost end 10e of the rim guard 10.

Preferably, the axially outermost end 10a of the rim guard 10 is located inside in the tyre radial direction with respect to the radially outer end 6e of the turn-up portion 6b. Thus, stiffness of the rim guard 10 is maintained high, and deformation of the rim guard 10 due to the load is suppressed, resulting in reducing the air resistance.

Preferably, the axially outermost end 10a of the rim guard 10 is located inside in the tyre radial direction with respect to the radially outer end 8e of the bead apex rubber 8. Thus, high stiffness of the rim guard 10 can be maintained to further reduce air resistance.

Outside the radially outermost end 10e of the rim guard 10, a thickness of the sidewall rubber 3G is relatively small. Thus, when the radially outer end 6e of the turn-up portion 6b, for example, is located outside in the tyre radial direction with respect to the radially outermost end 10e of the rim guard 10, large stiffness change occurs around the radially outer end 6e of the turn-up portion 6b. Thus, in this part, deformation of the sidewall portion 3 due to the load tends to increase and the air resistance may increase. From this perspective, it is preferable that the radially outermost end 10e of the rim guard 10 is located outside in the tyre radial direction with respect to the radially outer end 6e of the turn-up portions 6b. Similarly, the radially outermost end 10e of the rim guard 10 is preferably located outside in the tyre radial direction with respect to the radially outer end 8e of the bead apex rubber 8.

In the present embodiment, the radially outer end 6e of the turn-up portion 6b is located outward in the tyre radial direction with respect to a middle position of a radial distance between the axially outermost end 10a and the radially outermost end 10e of the rim guard 10. Further, in the present embodiment, the radially outer end 8e of the bead apex rubber 8 is located outward in the tyre radial direction with respect to the middle position of the radial distance between the axially outermost end 10a and the radially outermost end 10e of the rim guard 10.

It is preferable that on the at least one of the bead portions 4, a first gauge w1 of rubber disposed outside in the tyre axial direction of the carcass 6 at a location of the axially outermost end 10a of the rim guard 10 is equal to or less than three times a second gauge w2 of rubber disposed outside in the tyre axial direction of the carcass 6 at a location of the radially outermost end 10e of the rim guard. This can further enhance the air resistance reduction effect. The gauges w1 and w2 are the thickness of the sidewall rubber 3G in the tyre axial direction.

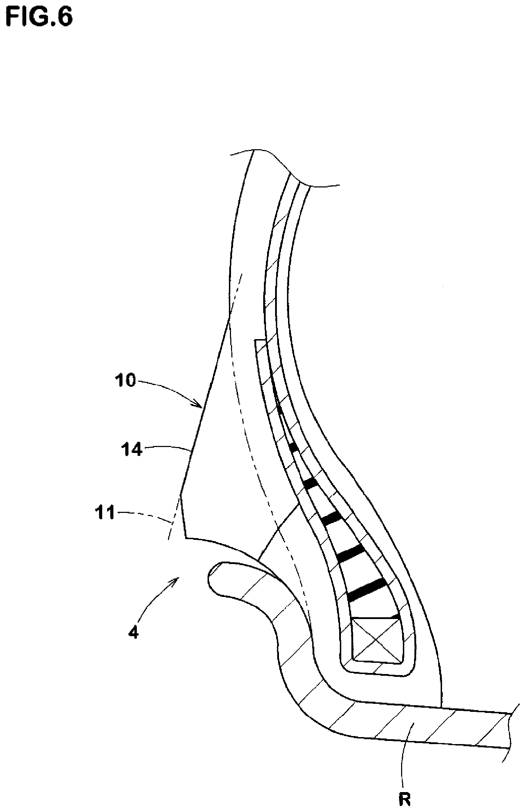

FIG. 6 is a cross-sectional view of the left side bead portion 4 according to another embodiment of the invention. In this embodiment, the same elements as those of the embodiment described above are denoted by the same reference numerals and the description thereof will be omitted. As illustrated in FIG. 6, the bead portions 4 according to this embodiment, in a cross-sectional view of the assembly, includes the rim guard 10 with the outer surface 14 that corresponds to the imaginary rim guard straight line 11. In other words, the outer surface 14 extends in a straight shape. Such an outer surface 14 can reduce the air resistance and increase stiffness of the rim guard 10 to prevent its damage, maintaining the air resistance reducing effect for a long time.

While the particularly preferable embodiments in accordance with the present invention have been described in detail, the present invention is not limited to the illustrated embodiments, but can be modified and carried out in various aspects within the scope of the claims.

### [Example]

Pneumatic tyres for passenger cars, 225/40R18, having the basic structure of FIG. 1 were prototyped based on the specifications in Table 1. Then, the fuel efficiency of each test tyre was tested. The test method is as follows.

### Fuel efficiency test:

The test tyres were installed on all wheels of a 2000cc passenger car under the following conditions. Then, a test driver drove the passenger car to evaluate the fuel efficiency (mileage per one litter of fuel). The test results are shown in Table 1 as an index with Ref. 1 being 100, and the larger the value, the smaller the air resistance and the better.
Mileage: 5000 km
Rim size: 18×6.0J
Internal pressure: 220 kPa

**[Table 1]**

| | Ref. 1 | Ref. 2 | Ex. 1 | Ex. 2 | Ex. 3 | Ex. 4 |
|---|---|---|---|---|---|---|
| Maximum gap (A) (mm) | 2.2 | 2.7 | 1.7 | 1.4 | 1.4 | 0.8 |
| Angle θ (deg.) | 45 | 60 | 35 | 30 | 0 | 30 |
| Fuel efficiency [index: larger is better] | 100 | 95 | 103 | 105 | 103 | 103 |

As the test results, it is understood that the example test tyres have improved fuel efficiency compared to the comparative example tyres.

## Claims

1. A tyre and rim assembly (T) comprising:
a rim (R) having a pair of flanges (Rb); and
a pneumatic tyre (1) being mounted onto the rim (R), the pneumatic tyre (1) comprising a pair of bead portions (4), a carcass (6) extending between the pair of bead portions (4), and a rim guard (10) being provided on at least one of the pair of bead portions (4), wherein
the pair of bead portions (4) comprises a pair of bead cores (5),
the carcass (6) comprises a main portion (6a) extending between the pair of bead cores (5) and a pair of turn-up portions (6b) turned up around the pair of bead cores (5) from axially inside to outside of the tyre (1),
in a cross-sectional view of the assembly (T) under a standard state in which the pneumatic tyre (1) is inflated to a standard pressure but loaded with no tyre load, the rim guard (10) protrudes outwardly in a tyre axial direction from a sidewall reference outer surface (J) of the tyre (1) so as to cover over one of the pair of flanges (Rb) located on the at least one of the bead portions (4),
the rim guard (10) defines an axially outermost end (10a) thereof, a radially outermost end (10e) thereof, and an imaginary rim guard straight line (11) that passes the axially outermost end (10a) and the radially outermost end (10e),
the axially outermost end (10a) of the rim guard (10) is located inward in the tyre radial direction with respect to a radially outer end (6e) of one of the pair of turn-up portions (6b) located on a side of the at least one of the bead portions (4), and
a maximum gap (A) in the tyre radial direction between the one of the pair of flanges (Rb) and the rim guard (10) is equal to or less than 2.0 mm,
**characterized in that** an angle (θ) of the imaginary rim guard straight line (11) with respect to a tyre radial direction is equal to or less than 40 degrees, and
the radially outermost end (10e) of the rim guard (10) is located outward in the tyre radial direction with respect to the radially outer end (6e) of one of the turn-up portions (6b).

2. The tyre and rim assembly (T) according to claim 1, wherein
the angle (θ) is equal to or less than 35 degrees.

3. The tyre and rim assembly (T) according to claim 1 or 2, wherein
in a cross-sectional view of the assembly (T), the rim guard (10) comprises a rim guard surface (14) that corresponds to the imaginary rim guard straight line (11).

4. The tyre and rim assembly (T) according to claim 1 or 2, wherein
the rim guard comprises a rim guard surface (14) that is a concave circular arc surface being concave inwardly in the tyre radial direction with respect to the imaginary rim guard straight line (11).

5. The tyre and rim assembly (T) according to claim 4, wherein
a radius of curvature of the concave circular arc surface of the rim guard (10) is in a range of 100 mm to 300 mm.

6. The tyre and rim assembly (T) according to any one of claims 1 to 5, wherein
the maximum gap (A) is equal to or less than 1.5 mm.

7. The tyre and rim assembly (T) according to any one of claims 1 to 6, wherein
in the at least one of the bead portions (4), a bead apex rubber (8) that extends outwardly in the tyre radial direction from the bead core (5) is disposed, and
the axially outermost end (10a) of the rim guard (10) is located inward in the tyre radial direction with respect to a radially outer end (8e) of the bead apex rubber (8).

8. The tyre and rim assembly (T) according to any one of claims 1 to 7, wherein
on the at least one of the bead portions (4), a first gauge (w1) of rubber disposed outside in the tyre axial direction of the carcass (6) at a location of the axially outermost end (10a) of the rim guard (10) is equal to or less than three times a second gauge (w2) of rubber disposed outside in the tyre axial direction of the carcass (6) at a location of the radially outermost end (10e) of the rim guard (10).

## Patentansprüche

1. Reifen- und Felgenanordnung (T), umfassend:
eine Felge (R) mit einem Paar Hörnern (Rb); und
einen Luftreifen (1), der auf die Felge (R) aufgezogen ist, wobei der Luftreifen (1) ein Paar Wulstabschnitte (4), eine Karkasse (6), die sich zwischen dem Paar Wulstabschnitten (4) erstreckt, und einen Felgenschutz (10) umfasst, der an mindestens einem von dem Paar Wulstabschnitte (4) vorgesehen ist, wobei
das Paar Wulstabschnitte (4) ein Paar Wulstkerne (5) umfasst,
die Karkasse (6) einen Hauptabschnitt (6a), der sich zwischen dem Paar Wulstkernen (5) erstreckt, und ein Paar Umschlagabschnitte (6b) umfasst, die um das Paar Wulstkerne (5) von axial innen nach außen des Reifens (1) umgeschlagen sind,
in einer Querschnittsansicht der Anordnung (T) in einem Standardzustand, in dem der Luftreifen (1) auf einen Standarddruck aufgepumpt, aber mit keiner Reifenlast belastet ist, der Felgenschutz (10) in einer axialen Richtung des Reifens von einer äußeren Bezugsfläche (J) der Seitenwand des Reifens (1) nach außen vorsteht, so dass er eines von dem Paar Hörnern (Rb), die sich an dem mindestens einen der Wulstabschnitte (4) befinden, abdeckt,
der Felgenschutz (10) ein axial äußerstes Ende (10a), ein radial äußerstes Ende (10e) und eine imaginäre Felgenschutzgerade (11) definiert, die durch das axial äußerste Ende (10a) und das radial äußerste Ende (10e) verläuft,
das axial äußerste Ende (10a) des Felgenschutzes (10) in der radialen Richtung des Reifens in Bezug auf ein radial äußeres Ende (6e) von einem des Paares Umschlagabschnitte (6b), die sich auf einer Seite des mindestens einen der Wulstabschnitte (4) befinden, innen angeordnet ist, und
ein maximaler Spalt (A) in der radialen Richtung des Reifens zwischen dem einen der beiden Hörner (Rb) und dem Felgenschutz (10) gleich oder kleiner als 2,0 mm ist,
**dadurch gekennzeichnet, dass** ein Winkel (θ) der imaginären Felgenschutzgeraden (11) in Bezug auf eine radiale Richtung des Reifens gleich oder kleiner als 40 Grad ist, und
das radial äußerste Ende (10e) des Felgenschutzes (10) in der radialen Richtung des Reifens in Bezug auf das radial äußere Ende (6e) von einem der Umschlagabschnitte (6b) außen liegt.

2. Reifen- und Felgenanordnung (T) nach Anspruch 1, wobei der Winkel (θ) gleich oder kleiner als 35 Grad ist.

3. Reifen- und Felgenanordnung (T) nach Anspruch 1 oder 2, wobei in einer Querschnittsansicht der Anordnung (T) der Felgenschutz (10) eine Felgenschutzfläche (14) aufweist, die der imaginären Felgenschutzgeraden (11) entspricht.

4. Reifen- und Felgenanordnung (T) nach Anspruch 1 oder 2, wobei der Felgenschutz eine Felgenschutzfläche (14) umfasst, die eine konkave Kreisbogenfläche ist, die in der radialen Richtung des Reifens in Bezug auf die imaginäre Felgenschutzgerade (11) nach innen konkav ist.

5. Reifen- und Felgenanordnung (T) nach Anspruch 4, wobei ein Krümmungsradius der konkaven Kreisbogenfläche des Felgenschutzes (10) in einem Bereich von 100 mm bis 300 mm liegt.

6. Reifen- und Felgenanordnung (T) nach einem der Ansprüche 1 bis 5, wobei der maximale Abstand (A) gleich oder kleiner als 1,5 mm ist.

7. Reifen- und Felgenanordnung (T) nach einem der Ansprüche 1 bis 6, wobei
in dem mindestens einen der Wulstabschnitte (4) ein Wulstkerngummi (8) angeordnet ist, der sich in der radialen Richtung des Reifens von dem Wulstkern (5) nach außen erstreckt, und
das axial äußerste Ende (10a) des Felgenschutzes (10) in Bezug auf ein radial äußeres Ende (8e) des Wulstkerngummis (8) in der radialen Richtung des Reifens innen angeordnet ist.

8. Reifen- und Felgenanordnung (T) nach einem der Ansprüche 1 bis 7, wobei an dem mindestens einen der Wulstabschnitte (4) eine erste Dicke (w1) des Gummis, die in der axialen Richtung des Reifens der Karkasse (6) an einer Stelle des axial äußersten Endes (10a) des Felgenschutzes (10) außen angeordnet ist, gleich oder kleiner als das Dreifache einer zweiten Dicke (w2) des Gummis ist, die in der axialen Richtung des Reifens der Karkasse (6) an einer Stelle des radial äußersten Endes (10e) des Felgenschutzes (10) außen angeordnet ist.

## Revendications

1. Pneumatique et assemblage formant jante (T) comprenant :
une jante (R) ayant une paire de brides (Rb) ; et
un bandage pneumatique (1) qui est monté sur la jante (R), le bandage pneumatique (1) comprenant une paire de portions de talon (4), une carcasse (6) s'étendant entre la paire de portions de talon (4), et un protège-jante (10) qui est prévu sur au moins une portion de la paire de portions de talon (4), dans lequel
la paire de portions de talon (4) comprend une paire d'âmes de talon (5),
la carcasse (6) comprend une portion principale (6a) s'étendant entre la paire d'âmes de talon (5) et une paire de portions retroussées (6b) retroussées autour de la paire d'âmes de talon (5) depuis, axialement, l'intérieur vers l'extérieur du pneumatique (1),
dans une vue de section transversale de l'assemblage (T) sous un état standard dans lequel le bandage pneumatique (1) est gonflé à une pression standard mais n'est chargé d'aucune charge de pneumatique, le protège-jante (10) se projette vers l'extérieur dans une direction axiale du pneumatique depuis une surface extérieure de référence de paroi latérale (J) du pneumatique (1) de manière à recouvrir une bride de la paire de brides (Rb) située sur ladite au moins une des portions de talon (4),
le protège-jante (10) définit une extrémité axialement la plus à l'extérieur (10a) de celui-ci, une extrémité radialement la plus à l'extérieur (10e) de celui-ci, et une ligne droite de protège-jante imaginaire (11) qui passe par l'extrémité axialement la plus à l'extérieur (10a) et l'extrémité radialement la plus à l'extérieur (10e),
l'extrémité axialement la plus à l'extérieur (10a) du protège-jante (10) est située à l'intérieur dans la direction radiale du pneumatique par rapport à une extrémité radialement extérieure (6e) d'une portion de la paire de portions retroussées (6b) située sur un côté de ladite au moins une des portions de talon (4), et
un intervalle maximum (A) dans la direction radiale du pneumatique entre ladite une bride de la paire de brides (Rb) et le protège-jante (10) est égal ou inférieur à 2,0 mm,
**caractérisé en ce qu'**un angle (θ) de la ligne droite de protège-jante imaginaire (11) par rapport à une direction radiale du pneumatique est égal ou inférieur à 40 degrés, et
l'extrémité radialement la plus à l'extérieur (10 e) du protège-jante (10) est située à l'extérieur dans la direction radiale du pneumatique par rapport à l'extrémité radialement extérieure (6e) d'une des portions retroussées (6b).

2. Pneumatique et assemblage formant jante (T) selon la revendication 1, dans lequel
l'angle (θ) est égal ou inférieur à 35 degrés.

3. Pneumatique et assemblage formant jante (T) selon la revendication 1 ou 2, dans lequel
dans une vue de section transversale de l'assemblage (T), le protège-jante (10) comprend une surface de protège-jante (14) qui correspond à la ligne droite de protège-jante imaginaire (11).

4. Pneumatique et assemblage formant jante (T) selon la revendication 1 ou 2, dans lequel
le protège-jante comprend une surface de protège-jante (14) qui est une surface en arc circulaire concave étant concave vers l'intérieur dans la direction radiale du pneumatique par rapport à la ligne droite de protège-jante imaginaire (11).

5. Pneumatique et assemblage formant jante (T) selon la revendication 4, dans lequel
un rayon de courbure de la surface en arc circulaire concave du protège-jante (10) est dans une plage de 100 mm à 300 mm.

6. Pneumatique et assemblage formant jante (T) selon l'une quelconque des revendications 1 à 5, dans lequel
l'intervalle maximum (A) est égal ou inférieur à 1,5 mm.

7. Pneumatique et assemblage formant jante (T) selon l'une quelconque des revendications 1 à 6, dans lequel
dans ladite au moins une des portions de talon (4), un caoutchouc de sommet de talon (8) qui s'étend vers l'extérieur dans la direction radiale du pneumatique depuis l'âme de talon (5) est disposé, et
l'extrémité axialement la plus à l'extérieur (10a) du protège-jante (10) est située à l'intérieur dans la direction radiale du pneumatique par rapport à une extrémité radialement extérieure (8e) du caoutchouc de sommet de talon (8).

8. Pneumatique et assemblage formant jante (T) selon l'une quelconque des revendications 1 à 7, dans lequel
sur ladite au moins une des portions de talon (4), une première jauge (w1) de caoutchouc disposée à l'extérieur dans la direction axiale du pneumatique de la carcasse (6) à un emplacement de l'extrémité axialement la plus à l'extérieur (10a) du protège-jante (10) est égale ou inférieure à trois fois une seconde jauge (w2) de caoutchouc disposée à l'extérieur dans la direction axiale du pneumatique de la carcasse (6) à un emplacement de l'extrémité radialement la plus à l'extérieur (10e) du protège-jante (10).
